# EUROPEAN PATENT SPECIFICATION

(11) **EP 2 456 297 B1**
(45) Date of publication and mention of the grant of the patent: **18.04.2018**
(21) Application number: 10740404.8
(22) Date of filing: 19.07.2010
(51) Int. Cl.: A01J 5/017, A01J 5/007, A01J 7/04

(54) **METHOD OF MILKING A GROUP OF DAIRY ANIMALS BY MEANS OF AN AUTOMATIC MILKING SYSTEM**
VERFAHREN ZUM MELKEN EINER GRUPPE VON MILCHTIEREN MITHILFE EINES AUTOMATISCHEN MELKSYSTEMS
PROCÉDÉ DE TRAITE D'UN GROUPE D'ANIMAUX LAITIERS AU MOYEN D'UN SYSTÈME DE TRAITE AUTOMATISÉ

(30) Priority: 20.07.2009 NL 1037142
(43) Date of publication of application: 30.05.2012
(73) Proprietor: Lely Patent N.V., 3147 PB Maassluis (NL)
(72) Inventor: KORTEKAAS, Martinus Petrus, 2161 XJ Lisse (NL); DE GROOT, Pieter Gerlof, 3381 JP Giessenburg (NL)
(86) International application number: PCT/NL2010/000108
(87) International publication number: WO 2011/010913

(56) References cited:
- WO-A1-00/67562
- WO-A1-2004/068940
- DE-A1-102007 051 435

## Description

The present invention relates to a method of milking a group of dairy animals by means of an automatic milking system, wherein the group comprises at least two subgroups. A first subgroup of dairy animals produces a first type of milk, and a second subgroup of dairy animals produces a second type of milk. The method comprises a number of steps. In one step, a dairy animal that presents itself for a milking is identified. Subsequently, a decision is taken about whether or not the dairy animal should be milked at that moment. If milking is desirable, a teat cleaning treatment is carried out prior to the start of the milking. During the teat cleaning treatment, at least one teat of the dairy animal is cleaned.

Such a method is known, see e.g. DE10 2007 051 435 A1 or WO 2004/068940 A1. In the method, an automatic milking system is used. In this case, there is used a milking robot which is provided with a robot arm for automatically attaching teat cups to an udder of a dairy animal.

The known milking system comprises an at least partially closable space, a so-called milking box, in which the dairy animal can be received. When the dairy animal is received, it is identified by the milking system. Upon identification of the dairy animals, particularities of the individual dairy animal can be processed by the control device during the milking.

Prior to the start of the milking, first a teat cleaning treatment is carried out. At the teat cleaning treatment a cleaning liquid, for example water, is used. When the teats are clean, the teat cups can be attached in order to start the actual milking.

It is a practical problem with the known method for the automatic milking system that the occupancy rate of the milking system is high. In other words, the capacity of the milking system is almost completely utilized. The period of time during which the dairy animal occupies the milking system is often experienced as too long.

NL1016380 describes a cleaning device and method for cleaning the teats of an udder of a dairy animal. The described device is adapted to be used in combination with a milking robot, in which case the milking robot has a robot arm for a mechanical coupling of teat cups to the teats of the udder. The cleaning device is arranged next to the robot arm. Prior to the start of the milking proper of the dairy animal, the teats are cleaned. For this purpose, the cleaning device comprises brushes that can rotate. The teats to be cleaned are drawn between the brushes, so that the teats are cleaned in an extremely efficient manner. If desired, the rollers can be moistened with a cleaning liquid that may consist of water.

WO0067562 discloses a method of cleaning teats, aiming at a reduction of side effects, such as health problems resulting in the occurrence of teat or udder irritations or the development of infections. It is also aimed at a reduction of the cleaning time. In order to reduce the cleaning time, it has been proposed to make the cleaning time dependent on the need for cleaning of an individual animal. Here, the degree of contamination of an individual animal is taken into consideration. Some animals remain cleaner and will thus undergo a shorter teat cleaning treatment. Other animals, on the other hand, often become extra dirty as a result of their behaviour. For these animals it is proposed to insert a longer teat cleaning treatment. It has also been disclosed to make the teat cleaning treatment dependent on the weather conditions or the season. At rainy weather, a longer teat cleaning treatment can be set automatically with the aid of measuring means that are in connection with a computer.

A problem with the known cleaning treatment of the teats is that the teat cleaning treatment still occupies relatively much time and is, as a result thereof, a limiting factor for the capacity of the milking robot. Despite measures taken to shorten a teat cleaning treatment duration, it continues to be desirable to achieve a further time saving in the method of cleaning teats.

The object of the present invention is to obviate at least partially at least one of the above-mentioned drawbacks, or else to provide a usable alternative. The invention aims in particular at providing a method by means of which the capacity of the milking system can be increased.

This object is achieved by means of a method for an automatic milking system, as defined in claim 1.

In the method according to the invention of milking a group of dairy animals by means of an automatic milking system, the group comprises at least two subgroups. The subgroups may be classified on the basis of different types of milk that are given by the dairy animals in question. These different types of milk may, for example, comprise consumption milk, beestings, milk from cows having mastitis, or milk from cows treated with antibiotics. It is usually undesirable to collect these different types in one and the same milk reservoir. Mixing consumption milk with the other types of milk may result in that the consumption milk is no longer fit for consumption. The consumption milk is milk that is fit for human consumption. Milk that should desirably not be mixed with consumption milk will be designated hereinafter as separation milk. By separation milk is meant milk that is separated and is not intended for human consumption. The separation of milk can, for example, take place by discharging milk to a sewer or a separate milk reservoir intended for this purpose. In the method according to the invention, a first subgroup of dairy animals produces a first type of milk, and a second subgroup of dairy animals produces a second type of milk, a separation milk.

The method according to the invention comprises a number of steps. In one step, a dairy animal that presents itself for a milking is identified. Subsequently, a decision is taken about whether or not the dairy animal should be milked at that moment. If milking is desirable and the dairy animal belongs to the first subgroup, a teat cleaning treatment is carried out prior to the start of the milking. During the teat cleaning treatment, at least one teat of the dairy animal is cleaned.

The method according to the invention is characterized in that, upon identification of a dairy animal from the second subgroup, a limitation for a teat cleaning treatment is issued by a control device.

According to the invention, the teat cleaning treatment can be carried out in a limited manner or be omitted completely for the dairy animal from the second subgroup. Normally, the teat cleaning treatment precedes the milk let-down. By cleaning the teats less intensively or not cleaning them at all, a considerable time saving can be achieved at a milking. The time during which a dairy animal occupies the milking system can thus be reduced. The passage time of a dairy animal in the milking system can be reduced. By means of the method according to the invention the capacity of a milking system can be increased considerably.

In a particular embodiment of the method according to the invention, a group of dairy animals is milked by means of an automatic milking system comprising a milking device with a milking box and a robot arm for attaching teat cups, in which case an animal can be admitted, cleaned and milked without human intervention. An example of such an automatic milking system is the known Lely Astronaut.

In one embodiment of the method according to the invention, the limitation implies that the teat cleaning treatment is omitted or at least moderated for all teats. When, upon identification of the dairy animal, it is established that all teats will produce separation milk, the control device can generate such a limitation for the teat cleaning treatment that no teat is cleaned or that the teats will be cleaned less intensively. The milking system can thus advantageously become available at an earlier point of time for a next dairy animal.

In one embodiment of the method according to the invention, the limitation implies that the teat cleaning treatment is omitted or moderated for at least one teat. With a dairy animal, for example, one of the teats may be known to have an infection, so that the milk from that teat should be separated. In that case, it is advantageous to omit the teat cleaning treatment of the infected teat in question. It can advantageously be prevented that the teat in question will become irritated by an unnecessary cleaning. The risk of health problems can thus be reduced.

In one embodiment of the method according to the invention, the limitation implies that there is carried out a teat cleaning treatment that has been shortened in its duration. The limitation can, for example, imply the generation of a control signal, which is decisive for the duration of the teat cleaning treatment. In one embodiment, in which moving brushes are used for the teat cleaning treatment, the duration of the motion of the brushes can, for example, be shortened. Relative to a completely omitted teat cleaning treatment, it may be advantageous to carry out a shortened teat cleaning treatment because, by the shortened teat cleaning treatment, a stimulating effect is still exercised on the teats, so that the milk let-down is stimulated.

In one embodiment of the method according to the invention, the limitation implies that a limited amount of cleaning liquid is used. In one embodiment, the limitation may imply that no cleaning liquid is used for the teat cleaning treatment. In that case, the teat cleaning treatment may solely consist of a mechanical teat cleaning treatment by means of, for example, moving brushes. A saving on cleaning liquids can thus be advantageously achieved, a stimulating effect on the teats still being exerted at the same time, as a result of which the milk let-down is stimulated. In a particular embodiment, it is possible to omit or at least reduce only additions to water, such as cleaning liquid. This can be advantageous, because omitting the additions makes the teat cleaning treatment less harmful to the environment.

In a particular embodiment, the method according to the invention comprises a step in which dairy animals of a subgroup are pre-selected. Carrying out a selection in a step may result in a particular composition of the group. By using the method in a group of dairy animals with a particular composition a considerable time saving can be achieved. The particular composition of the group may imply that the group comprises relatively many dairy animals producing separation milk. In a selected group, the milking cycles can run synchronously to a large extent. In such a group, relatively many dairy animals can simultaneously give beestings which is unfit for consumption and which should not be mixed with the consumption milk.

Another example is a group of dairy animals containing relatively many sick cows that are treated with antibiotics. This group of dairy animals may be selected from a total group and, for example, be separated in order to be subsequently presented collectively to the milking system. The dairy animals from the selected group can be milked one after another, in which case teat cleaning treatments can be omitted or at least be carried out less intensively.

Dairy animals from substantially one subgroup can be allotted to the milking system by selection. Dairy animals from one subgroup can, for example, be refused at first by the milking system, in which case the dairy animals can subsequently be kept apart and be collected until a later point of time.

In an embodiment, it is possible to keep a number of dairy animals from a specific subgroup apart and to collect them at the milking system and to have them milked consecutively without allowing dairy animals from the other subgroup to join these collected dairy animals.

Collecting can be carried out manually by a farmer. In such an embodiment, it is possible for the farmer to indicate manually how many dairy animals from the one subgroup should be milked before a dairy animal from the other subgroup can be milked.

It is also possible to carry out the collecting automatically, for example by means of a waiting area that is provided with an automatic access gate. By means of an identification system, it is possible for the access gate to determine the identity of a dairy animal and to establish whether the dairy animal belongs to the subgroup concerned, and whether or not to allow the dairy animal, on the basis thereof, to enter the waiting area. The number of dairy animals present in the waiting area can then be used as the minimum number of dairy animals to be milked from the subgroup concerned.

At the later point of time, the selected dairy animals can subsequently be admitted consecutively to the milking system. By admitting the dairy animals in this manner in groups to the milking system, a considerable saving on the teat cleaning treatments can be obtained. By selecting and admitting in groups the capacity of the milking system can be used more efficiently.

Because, in such particular group compositions, the dairy animals that are admitted to the milking system one after another may belong to the same subgroup, it is possible to achieve a saving on the total cleaning time for a group of dairy animals. Specific actions, such as the rinsing of cleaning brushes, which are necessary for the preparation of a cleaning of a next dairy animal, can be limited or be omitted completely if the next dairy animal belongs to the same subgroup as a previous dairy animal. For this reason it can be advantageous if the method comprises a step in which such a particular group is formed by selection.

The invention further relates to a construction according to claim 10.

Further exemplary embodiments are defined in the other sub-claims.

The invention will be explained in further detail with reference to accompanying figures. The figures, which may not be regarded in a restrictive sense, form a practical embodiment of the invention. Specific detail characteristics may also be considered separate from the embodiment, in a general sense as characterizing the invention, wherein:
Figure 1 shows a first embodiment of a milking system according to the invention;
Figure 2 shows a flowchart of an embodiment of the method according to the invention;
Figure 3 shows a second embodiment according to the invention, and
Figure 4 shows a third embodiment according to the invention.

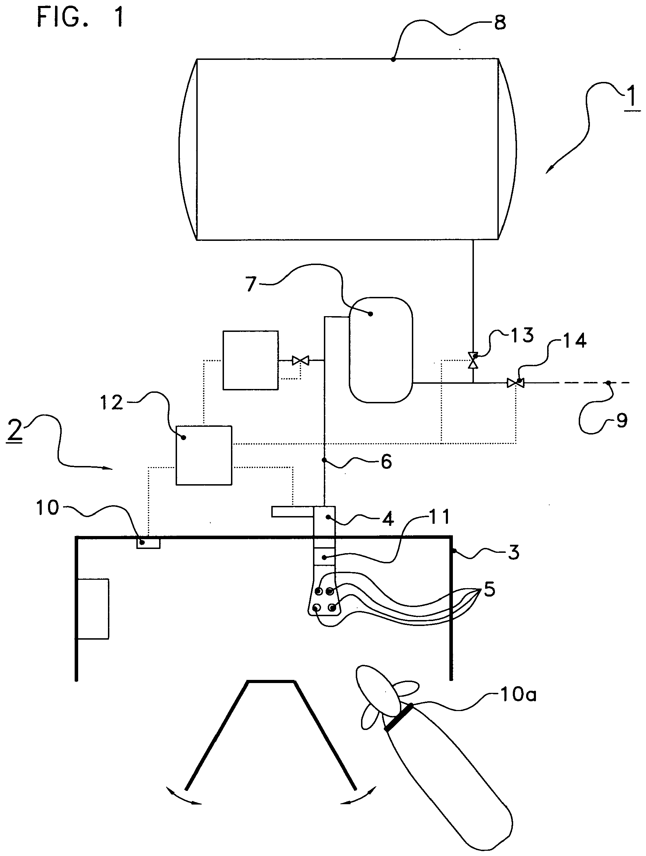

Figure 1 shows a construction according to the invention, denoted as a whole by reference numeral 1. The construction comprises a milking system 2 with a milking box 3 for receiving a dairy animal, and a milking robot 4 for attaching teat cups 5 to the teats of the dairy animal. The teat cups 5 are each connected to a milk line 6 for leading the milk to a temporary milk reservoir 7, for example a milk jar, for receiving the milk during the milking. After a milking, the milk, in dependence on its type, is discharged from the temporary reservoir 7 to a consumption milk reservoir 8 or another destination 9, for example another milk reservoir or the sewer.

The milking system 2 can be used for milking a group of dairy animals, of which a first subgroup produces consumption milk and a second subgroup produces separation milk. The consumption milk from the first subgroup will be stored in the consumption milk reservoir 8, so that it can be collected at a later point of time by a milk collecting service, while the separation milk is discharged separately to another destination 9, for example stored in a second reservoir or discharged to the sewer. It is possible to discharge different types of separation milk, for example beestings and milk that contains antibiotics, to different destinations. In that case, there are more than two subgroups.

There is provided an identification system 10 that is able to identify a dairy animal present in the milking box, for example by means of a transponder 10a attached to a collar of the dairy animal.

In the embodiment of Figure 1 there is provided a control device 12 for controlling the milking system 2 to milk a dairy animal present in the milking box 3. The control device 12 is further configured to control valves 13 and 14 disposed in the milk line 6, by means of which the milk can be led from the temporary milk reservoir 7 to the consumption milk reservoir 8 or the other destination 9.

The control device 12 is also provided for putting, if required, a teat cleaning device 11 into operation. According to the invention, the control device 12 is configured to limit or to omit completely the cleaning of at least one teat of a dairy animal from the second subgroup. The limitation preferably relates to the teat cleaning treatment prior to the milk let-down.

In one embodiment, the teat cleaning device can be designed so as to have at least two cleaning brushes. The cleaning brushes can be arranged rotatably. Preferably, an assembly of two cleaning brushes has a pair of axes of rotation located substantially parallel. Preferably, the cleaning brushes rotate in opposite directions during operation. Preferably, the teat cleaning device is further provided with a cleaning liquid supplying unit. By means of this, water with an additive can, for example, be supplied as a cleaning liquid. Preferably, the cleaning liquid supplying unit is configured to supply a cleaning liquid over the cleaning brushes. For this purpose, the cleaning liquid supplying unit can be provided with spray nozzles.

In one embodiment of the teat cleaning device, there may be provided a cleaning cup for cleaning a teat. The cleaning cup can receive a teat in a cup space. The teat can be cleaned with the aid of a cleaning liquid supplied to the cleaning cup.

If desired, during a teat cleaning treatment air can be supplied, for example for drying a teat. There may be provided heating means for heating air and/or cleaning liquid.

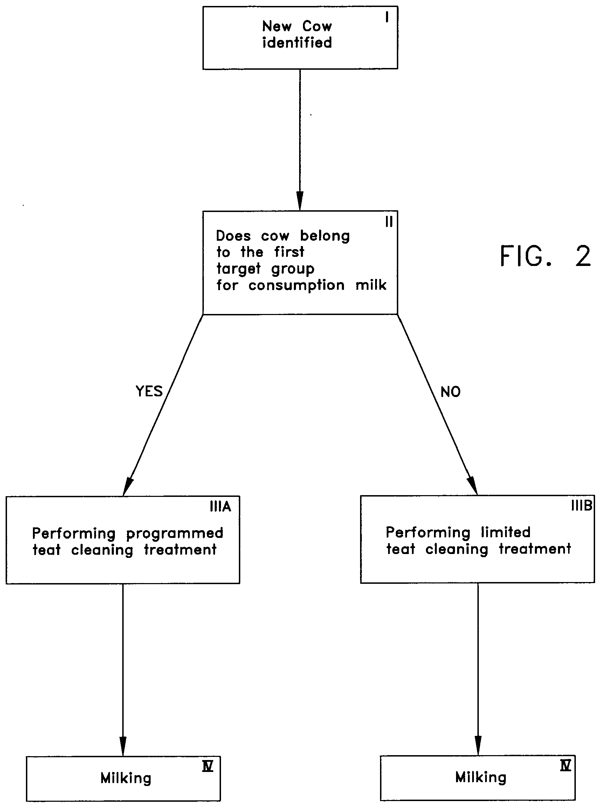

Figure 2 shows in a flowchart with four steps I, II, III and IV how the control device 12 can be applied when milking a group of dairy animals. The group of dairy animals is divided into a first subgroup that produces consumption milk and a second subgroup that produces separation milk. In a first step I, a dairy animal is identified by means of the identification system 10 when it enters the milking box 3. On the basis of this identification, the control device can determine to which subgroup the dairy animal belongs. In a second step II, it is determined whether the dairy animal belongs to the first subgroup A for producing consumption milk.

If the identified dairy animal belongs to the first subgroup, the dairy animal can immediately undergo a programmed teat cleaning treatment. This takes place in step IIIA. The programmed teat cleaning treatment can be a standard treatment that is programmed for all dairy animals. The programmed teat cleaning treatment can also relate to an individual teat cleaning treatment programmed in dependence on the dairy animal. In the teat cleaning treatment attuned to the individual dairy animal, it is possible, for example, to take the sensitivity of contamination of the dairy animal in question into account. By their behaviour or physical properties, such as low positioned udders, it is possible for dairy animals to become contaminated to a greater or lesser extent. In the programmed teat cleaning treatment, this may have been taken into account by prescribing for one dairy animal a more intensive teat cleaning treatment than for another dairy animal. Weather conditions may also have been processed in the programmed teat cleaning treatment. The teat cleaning treatment can, for example, be carried out more intensively under wet conditions.

If the identified dairy animal belongs to the second subgroup B, according to the invention a limited teat cleaning treatment is carried out or the teat cleaning treatment is completely omitted. This takes place in step IIIB. The dairy animal is milked in a following step IV. In the case of separation milk, the control device 12 will control the valves 13, 14 to lead the separation milk after the milking to another destination 9 than the consumption milk reservoir 8.

Furthermore, before, during or after the milking of the new cow from the first subgroup, the valves 13, 14 will be controlled by the control device in order to lead the consumption milk of the new cow, after the milking, from the temporary milk reservoir 7 to the consumption milk reservoir 8.

During or after the milking it is further possible to check whether the milk of the new cow is indeed fit for consumption. If this is not the case, because the dairy animal has, for example, become ill, it is still possible to lead the milk from the temporary milk reservoir 7 to another destination 9.

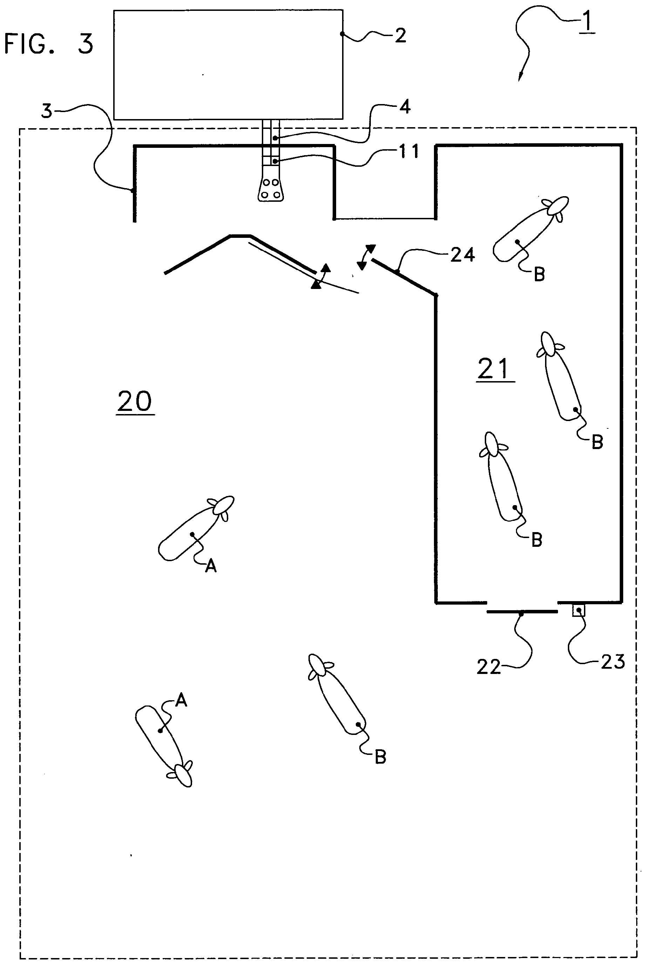

Figure 3 shows an embodiment of a construction 1 comprising a milking system 2 with a milking box 3 and a milking robot 4. For the rest, the milking system 2 can be designed in accordance with the milking system 2 of Figure 1 and is not shown in further detail in Figure 3. The milking box 3 is arranged in a closed area 20, for example a pasture or a stable, in which a group of dairy animals A, B is present. The group comprises two subgroups with dairy animals A from the first subgroup that produce consumption milk and dairy animals B from a second subgroup that produce separation milk.

The construction 1 is provided with a waiting area 21 for collecting a number of dairy animals belonging to a specific subgroup. The drawing shows that dairy animals B from the second subgroup have been collected in the waiting area 21. This collecting may have been carried out manually by a farmer. It is also possible that there is provided an automatic access gate 22 for the waiting area, which access gate only admits dairy animals from the relevant subgroup. For this purpose, the access gate 22 may be provided with an identification system 23 that is able to determine to which subgroup a dairy animal belongs and to decide, in dependence thereof, to open or not to open the access gate.

If a number of dairy animals from a specific subgroup have been collected in the waiting area 21, these dairy animals can be milked consecutively in a simple manner.

In order to milk the dairy animals in the waiting area 21 consecutively, there is provided an admission system 24 that directly admits dairy animals from the waiting area 21 or selectively from the closed area 20. The admission system 24 may be designed as an automatic system but may alternatively also be manually operable. If desired, the admission system can be provided with an identification system for determining the identity of dairy animals that report at the admission system 24 from the waiting area 21 or directly from the closed area 20.

The number of dairy animals present in the waiting area 21 can be used as the minimum number of dairy animals from this subgroup to be milked consecutively. This can be made manually by the farmer, in particular if the farmer has also collected himself the dairy animals B in the waiting area 21. It is also possible that, on the basis of information from the automatic access gate 22 and/or the automatic admission system 24, the minimum number of dairy animals is determined.

For example, if five dairy animals B have been admitted by the automatic access gate 23 to the waiting area 21, the automatic access gate 23 can transmit this information to the control device 12 in order to milk consecutively at least five dairy animals B from the waiting area 21. In this case, the automatic admission system 24 can be controlled to admit, during the milking of these dairy animals B from the waiting area 21, only dairy animals B from the waiting area 21 to the milking box 3. After the milking of the desired number of dairy animals B from the waiting area 21 the milking system 2 can be rinsed, possibly after identification of a next dairy animal.

When during the milking of the dairy animals B from the waiting area 21 new dairy animals B are admitted, the minimum number of dairy animals to be milked can be raised accordingly.

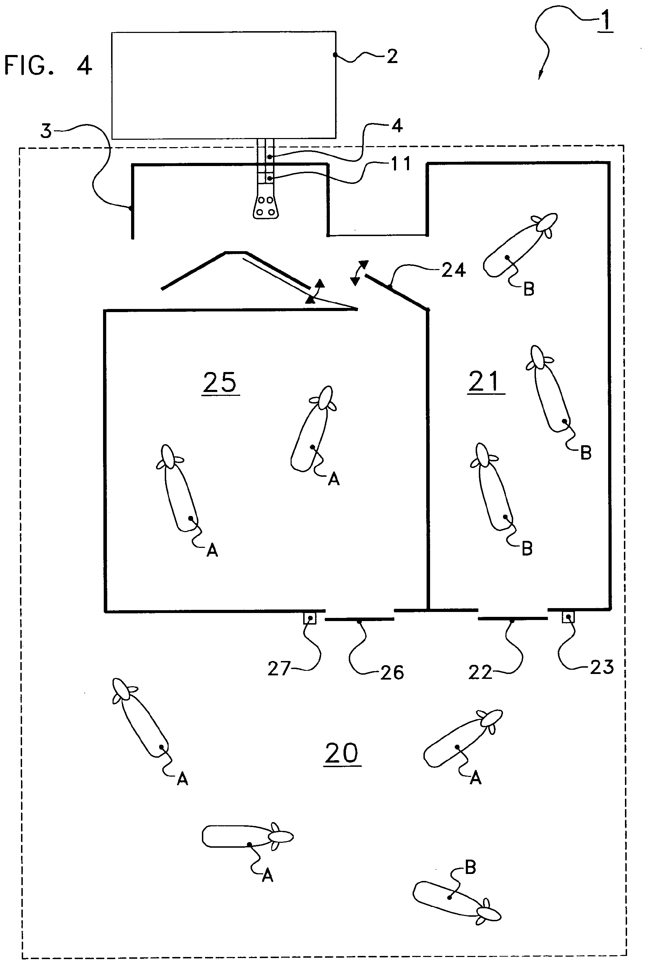

Figure 4 shows an alternative embodiment of the construction of Figure 3. In this construction, there is provided a second waiting area 25 for collecting dairy animals from a specific subgroup. In this embodiment, both dairy animals A from the first subgroup and dairy animals B from the second subgroup can be collected in the waiting areas 25, 21, respectively.

Both the waiting area 21 and the waiting area 25 are provided with an automatic access gate 22, 26 with an identification system 23, 27. The dairy animals A, B are thus collected automatically in the respective waiting area 21, 25. Alternatively, this can also be carried out manually.

On the basis of the numbers of dairy animals present in the waiting areas 21, 25, the number of dairy animals to be milked consecutively from the first or the second subgroup can be determined. On the basis of these data, the automatic admission system 24 can admit selectively dairy animals from one of the two waiting areas 21, 25 to the milking box 3. In this manner, the efficiency of the use of the milking system 2 can be increased further.

There are thus provided according to the invention a method and a construction in which for a subgroup a limited teat cleaning treatment is carried out, by means of which a considerable time saving can be achieved. As a result thereof, the capacity of an automatic milking system can advantageously be increased.

## Claims

1. Method of milking a group of dairy animals (A, B) by means of an automatic milking system (2), wherein the group comprises at least two subgroups, wherein a first subgroup comprises dairy animals (A) that produce a first type of milk, and a second subgroup comprises dairy animals (B) that produce a second type of milk, wherein the method comprises the following steps:
a) identifying a dairy animal that presents itself for a milking;
b) taking a decision about whether the dairy animal that presents itself should be milked;
c) milking the dairy animal if milking is desirable,
**characterized in that** the method further comprises a step in which, if milking is desirable, upon identification of a dairy animal from the first subgroup (A) a teat cleaning treatment for cleaning at least one teat of the dairy animal is carried out, and wherein, if milking is desirable, upon identification of a dairy animal from the second subgroup (B) a limitation for a teat cleaning treatment to be carried out is issued by a control device (12).

2. Method according to claim 1, wherein the limitation comprises an omission of the teat cleaning treatment for all teats.

3. Method according to claim 1 or 2, wherein the first type of milk is consumption milk and the second type of milk is separation milk.

4. Method according to any one of the preceding claims, wherein the limitation comprises an omission or moderation of the teat cleaning treatment for at least one teat.

5. Method according to any one of the preceding claims, wherein the limitation comprises a teat cleaning treatment that has been shortened in its duration.

6. Method according to any one of the preceding claims, wherein the limitation comprises a reduction of the total amount of cleaning liquid used.

7. Method according to any one of the preceding claims, wherein the limitation comprises a reduction of an ingredient of the cleaning liquid.

8. Method according to any one of the preceding claims, wherein the method comprises a step in which dairy animals are selected on the basis of a type of milk to be given and are kept apart prior to the start of a milking in groups.

9. Method according to claim 8, wherein at the milking in groups a teat cleaning treatment is limited.

10. Construction (1) for milking a group of dairy animals (A, B), wherein the group comprises at least two subgroups, wherein a first subgroup comprises dairy animals (A) that produce a first type of milk, and a second subgroup comprises dairy animals (B) that produce a second type of milk, comprising:
- a milking system (2) for milking the dairy animal,
- an identification system (10) for identifying a dairy animal that presents itself for a milking,
- a teat cleaning device (11) for cleaning at least one teat, and
- a control device (12), wherein the control device is configured to:
- take a decision about whether the dairy animal that presents itself should be milked,
- control the milking system for milking a dairy animal, if desirable, and
- put the teat cleaning device (11) into operation, for cleaning a teat of a dairy animal from the first subgroup (A),
**characterized in that,**
the control device (12), upon identification of a dairy animal from the second subgroup (B), is configured to limit the action of the teat cleaning device (11).

11. Construction (1) according to claim 10, wherein the construction comprises at least one waiting area (21, 25) for collecting dairy animals from one of the two subgroups.

12. Construction (1) according to claim 10 or 11, wherein the milking system comprises two waiting areas (21, 25), wherein dairy animals (A) from the first subgroup are collected in a first waiting area (25) and dairy animals (B) from the second subgroup are collected in a second waiting area (21), and wherein, after a dairy animal from one of the waiting areas has been milked, only dairy animals from the same one waiting area are admitted until a minimum number of dairy animals from said one waiting area has been milked or until no more dairy animals are present in said waiting area.

13. Construction (1) according to any one of claims 10-12, wherein the construction has an automatic admission system (24) for selectively admitting dairy animals from the waiting area (21, 25), the second waiting area (25, 21) and/or another area to the milking system (2).

14. Construction according to any one of claims 10-13, wherein the waiting area and/or the second waiting area (25, 21) comprise(s) an automatic access gate (22, 26) for admitting dairy animals to the waiting area, the second waiting area, respectively.

## Patentansprüche

1. Verfahren zum Melken einer Gruppe von Milchtieren (A, B) mittels eines automatischen Melksystems (2), wobei die Gruppe mindestens zwei Untergruppen umfasst, wobei eine erste Untergruppe Milchtiere (A), die einen ersten Milchtyp erzeugen, umfasst und eine zweite Untergruppe Milchtiere (B), die einen zweiten Milchtyp erzeugen, umfasst, und wobei das Verfahren die folgenden Schritte umfasst:
a) Erkennen eines Milchtiers, das sich für einen Melkgang anbietet;
b) Entscheiden, ob das Milchtier, das sich anbietet, gemolken werden soll;
c) Melken des Milchtiers, wenn ein Melken gewünscht ist;
**dadurch gekennzeichnet, dass** das Verfahren ferner einen Schritt umfasst, in dem dann, wenn Melken gewünscht ist, aufgrund einer Erkennung eines Milchtiers aus der ersten Untergruppe (A) eine Zitzenreinigungsbehandlung zum Reinigen mindestens einer Zitze des Milchtiers ausgeführt wird, und dann, wenn Melken gewünscht ist, aufgrund einer Erkennung eines Milchtiers aus der zweiten Untergruppe (B) eine Einschränkung für eine auszuführende Zitzenreinigungsbehandlung durch eine Steuervorrichtung (12) ausgegeben wird.

2. Verfahren nach Anspruch 1, wobei die Einschränkung eine Unterlassung der Zitzenreinigungsbehandlung für alle Zitzen umfasst.

3. Verfahren nach Anspruch 1 oder 2, wobei der erste Milchtyp Trinkmilch und der zweite Milchtyp Trennmilch ist.

4. Verfahren nach einem der vorhergehenden Ansprüche, wobei die Einschränkung eine Unterlassung oder eine Mäßigung der Zitzenreinigungsbehandlung für mindestens eine Zitze umfasst.

5. Verfahren nach einem der vorhergehenden Ansprüche, wobei die Einschränkung eine Zitzenreinigungsbehandlung umfasst, die in ihrer Dauer verkürzt wurde.

6. Verfahren nach einem der vorhergehenden Ansprüche, wobei die Einschränkung eine Verringerung der Gesamtmenge verwendeter Reinigungsflüssigkeit umfasst.

7. Verfahren nach einem der vorhergehenden Ansprüche, wobei die Einschränkung eine Verringerung eines Bestandteils der Reinigungsflüssigkeit umfasst.

8. Verfahren nach einem der vorhergehenden Ansprüche, wobei das Verfahren einen Schritt umfasst, in dem Milchtiere auf der Grundlage eines zu gebenden Milchtyps ausgewählt werden und vor dem Start eines Melkgangs in Gruppen getrennt gehalten werden.

9. Verfahren nach Anspruch 8, wobei bei dem Melken in Gruppen eine Zitzenreinigungsbehandlung eingeschränkt ist.

10. Konstruktion (1) zum Melken einer Gruppe von Milchtieren (A, B), wobei die Gruppe mindestens zwei Untergruppen umfasst, wobei eine erste Untergruppe Milchtiere (A), die einen ersten Milchtyp erzeugen, umfasst und eine zweite Untergruppe Milchtiere (B), die einen zweiten Milchtyp erzeugen, umfasst, das Folgendes umfasst:
- ein Melksystem (2) zum Melken des Milchtiers,
- ein Erkennungssystem (10) zum Erkennen eines Milchtiers, das sich für einen Melkgang anbietet,
- eine Zitzenreinigungsvorrichtung (12) zum Reinigen mindestens einer Zitze, und
- eine Steuervorrichtung (12), wobei die Steuervorrichtung konfiguriert ist zum:
- Entscheiden, ob das Milchtier, das sich anbietet, gemolken werden soll,
- Steuern des Melksystems zum Melken eines Milchtiers, wenn gewünscht, und
- Setzen der Zitzenreinigungsvorrichtung (11) in Betrieb zum Reinigen einer Zitze eines Milchtiers aus der ersten Untergruppe (A),
**dadurch gekennzeichnet, dass**
die Steuervorrichtung (12) aufgrund der Erkennung eines Milchtiers aus der zweiten Untergruppe (B) konfiguriert ist, den Einsatz der Zitzenreinigungsvorrichtung (11) einzuschränken.

11. Konstruktion (1) nach Anspruch 10, wobei die Konstruktion mindestens einen Wartebereich (21, 25) zum Sammeln von Milchtieren aus einer der beiden Untergruppen umfasst.

12. Konstruktion (1) nach Anspruch 10 oder 11, wobei das Melksystem zwei Wartebereiche (21, 25) umfasst, wobei Milchtiere (A) aus der ersten Untergruppe in einem ersten Wartebereich (25) gesammelt werden und Milchtiere (B) aus der zweiten Untergruppe in einem zweiten Wartebereich (21) gesammelt werden und wobei nachdem ein Milchtier aus einem der Wartebereiche gemolken worden ist nur Milchtiere aus demselben einen Wartebereich zugelassen werden, bis eine Mindestzahl von Milchtieren aus dem ersten Wartebereich gemolken worden ist oder bis keine weiteren Milchtiere in dem Wartebereich vorhanden sind.

13. Konstruktion (1) nach einem der Ansprüche 10 bis 12, wobei die Konstruktion ein automatisches Zulassungssystem (24) zum selektiven Zulassen von Milchtieren aus dem Wartebereich (21, 25), dem zweiten Wartebereich (25, 21) und/oder einem weiteren Bereich zu dem Melksystem (2) besitzt.

14. Konstruktion nach einem der Ansprüche 10 bis 13, wobei der Wartebereich und/oder der zweite Wartebereich (25, 21) ein automatisches Zugangstor (22, 26) zum Zulassen von Milchtieren zu dem Wartebereich bzw. dem zweiten Wartebereich umfassen.

## Revendications

1. Procédé de traite d'un groupe d'animaux laitiers (A, B) au moyen d'un système de traite automatique (2), le groupe comprenant au moins deux sous-groupes, un premier sous-groupe comprenant des animaux laitiers (A) qui produisent un premier type de lait, et un second sous-groupe comprenant des animaux laitiers (B) qui produisent un second type de lait, le procédé comprenant les étapes suivantes consistant à :
a) identifier un animal laitier qui se présente lui-même pour une traite ;
b) décider si l'animal laitier qui se présente lui-même doit être trait ;
c) traire l'animal laitier si la traite est souhaitable,
le procédé étant **caractérisé en ce qu'**il comprend en outre une étape au cours de laquelle, si une traite est souhaitable, à l'identification d'un animal laitier provenant du premier sous-groupe (A), un traitement de nettoyage de trayon permettant de nettoyer au moins un trayon de l'animal laitier est réalisé, et au cours de laquelle, si une traite est souhaitable, à l'identification d'un animal laitier provenant du second sous-groupe (B), une limitation relative à un traitement de nettoyage de trayon à réaliser est émise par un dispositif de contrôle (12).

2. Procédé selon la revendication 1, dans lequel la limitation comprend une omission du traitement de nettoyage de trayon pour tous les trayons.

3. Procédé selon la revendication 1 ou 2, dans lequel le premier type de lait est un lait de consommation et le second type de lait est un lait de séparation.

4. Procédé selon l'une quelconque des revendications précédentes, dans lequel la limitation comprend une omission ou une modération du traitement de nettoyage de trayon pour au moins un trayon.

5. Procédé selon l'une quelconque des revendications précédentes, dans lequel la limitation comprend un traitement de nettoyage de trayon dont la durée a été raccourcie.

6. Procédé selon l'une quelconque des revendications précédentes, dans lequel la limitation comprend une réduction de la quantité totale de liquide de nettoyage utilisé.

7. Procédé selon l'une quelconque des revendications précédentes, dans lequel la limitation comprend une réduction d'un ingrédient du liquide de nettoyage.

8. Procédé selon l'une quelconque des revendications précédentes, le procédé comprenant une étape au cours de laquelle les animaux laitiers sont sélectionnés sur la base d'un type de lait à donner et sont maintenus séparés avant le début d'une traite en groupes.

9. Procédé selon la revendication 8, dans lequel au cours de la traite en groupes, un traitement de nettoyage de trayon est limité.

10. Construction (1) pour la traite d'un groupe d'animaux laitiers (A, B), le groupe comprenant au moins deux sous-groupes, un premier sous-groupe comprenant des animaux laitiers (A) qui produisent un premier type de lait, et un second sous-groupe comprenant des animaux laitiers (B) qui produisent un second type de lait, la construction comprenant :
- un système de traite (2) permettant de traire l'animal laitier ;
- un système d'identification (10) permettant d'identifier un animal laitier qui se présente lui-même pour une traite ;
- dispositif de nettoyage de trayon (11) permettant de nettoyer au moins un trayon ; et
- un dispositif de contrôle (12), le dispositif de contrôle étant conçu pour :
- décider si l'animal laitier qui se présente lui-même doit être trait,
- contrôler le système de traite permettant de traire un animal laitier, si la traite est souhaitable, et
- mettre le dispositif de nettoyage de trayon (11) en fonctionnement, pour nettoyer un trayon d'un animal laitier provenant du premier sous-groupe (A),
la construction étant **caractérisée en ce que** :
le dispositif de contrôle (12), à l'identification d'un animal laitier provenant du second sous-groupe (B), est conçu pour limiter l'action du dispositif de nettoyage de trayon (11).

11. Construction (1) selon la revendication 10, la construction comprenant au moins une zone d'attente (21, 25) permettant de regrouper les animaux laitiers d'un des deux sous-groupes.

12. Construction (1) selon la revendication 10 ou 11, dans laquelle le système de traite comprend deux zones d'attente (21, 25), les animaux laitiers (A) provenant du premier sous-groupe étant regroupés dans une première zone d'attente (25) et les animaux laitiers (B) provenant du second sous-groupe étant regroupés dans une seconde zone d'attente (21), et dans laquelle, une fois qu'un animal laitier d'une des zones d'attente a été trait, seuls les animaux laitiers de la même zone d'attente sont admis jusqu'à ce qu'un nombre minimum d'animaux laitiers de ladite zone d'attente ait été trait ou jusqu'à ce qu'il n'y ait plus d'animaux laitiers présents dans ladite zone d'attente.

13. Construction (1) selon l'une quelconque des revendications 10 à 12, la construction ayant un système d'admission automatique (24) permettant d'admettre de manière sélective dans le système de traite (2) des animaux laitiers provenant de la zone d'attente (21, 25), de la seconde zone d'attente (25, 21) et/ou d'une autre zone.

14. Construction selon l'une quelconque des revendications 10 à 13, dans laquelle la zone d'attente et/ou la seconde zone d'attente (25, 21) comprennent une porte d'accès automatique (22, 26) permettant d'admettre respectivement des animaux laitiers dans la zone d'attente ou la seconde zone d'attente.
